# EUROPEAN PATENT APPLICATION

(11) **EP 1 596 073 A1**
(43) Date of publication of application: **16.11.2005**
(21) Application number: 04425349.0
(22) Date of filing: 14.05.2004
(51) Int. Cl.: F15B 13/00, F16K 17/04, B62D 5/06

(54) **Hydraulic circuit with a dual-function valve**

(71) Applicant: TRW Automotive Italia S.p.A, 10129 Torino (IT)
(72) Inventor: Albieri, Michele, 44035 Formignana (IT); Zambardi, Roberto, 44025 Massafiscaglia (IT); Barboni, Lorenzo, 44021 Codigoro (IT); Bertelli, Maurizio, 44025 Massafiscaglia (IT)
(74) Representative: Franzolin, Luigi

(57) **Abstract**

In a hydraulic circuit for supplying pressurized oil from a tank (3) to a user device (4), a feed pump (5) is mounted in parallel with a dual-function valve (7) having two shutter members (38, 29), which are normally maintained in respective closed positions closing the valve (7), and which are moved into respective open positions opening the valve (7), one in the event of breakdown of the pump (5), to ensure oil supply from the tank (3) to the user device (4), and the other when the pressure of the oil supplied to the user device (4) substantially equals a given threshold value, so as to drain the oil from the pump (5) into the tank (3).

## Description

The present invention relates to a hydraulic circuit with a dual-function valve.

The present invention may be used to particular advantage in an automotive steering assembly, to which the following description refers purely by way of example.

Known steering assemblies normally comprise a pump unit for pumping pressurized oil from a tank to a hydraulic steering system; and a dual-function valve in parallel with the pump unit and for ensuring oil supply from the tank to the hydraulic steering system in the event the pump unit breaks down, and also for draining oil from the pump unit into the tank when the pressure of the oil supply to the hydraulic steering system substantially equals a given threshold value.

Known steering assemblies of the above type have various drawbacks, mainly due to comprising relatively complex, high-cost dual-function valves.

It is an object of the present invention to provide a hydraulic circuit with a dual-function valve, designed to eliminate the aforementioned drawbacks, and which is cheap and easy to produce.

According to the present invention, there is provided a hydraulic circuit with a dual-function valve, as claimed in Claim 1.

A non-limiting embodiment of the present invention will be described by way of example with reference to the accompanying drawings, in which:
Figure 1 shows, schematically, an automotive steering assembly featuring a preferred embodiment of the hydraulic circuit according to the present invention;
Figure 2 shows a longitudinal section of a detail in Figure 1.

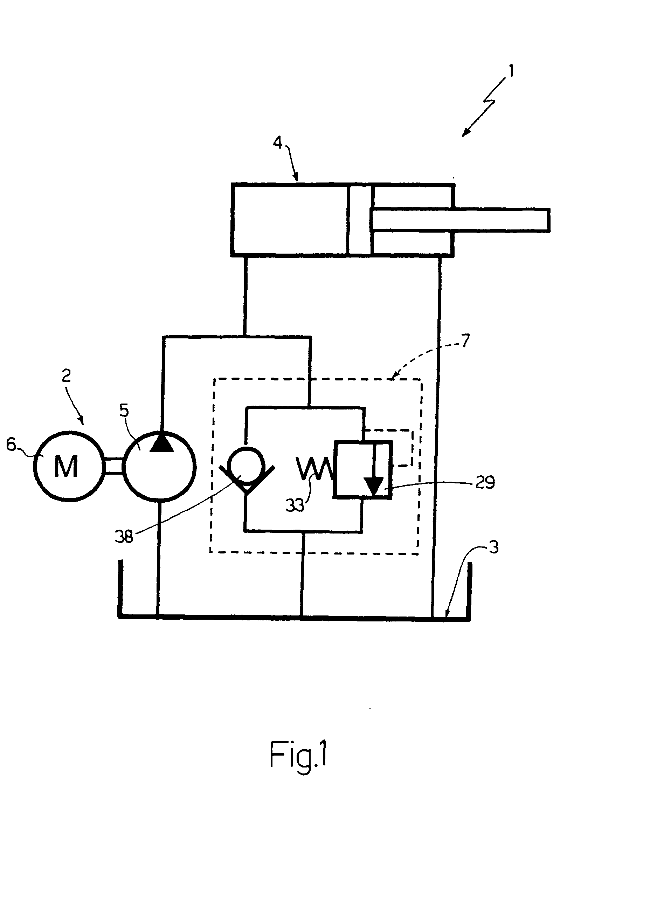

Number 1 in Figure 1 indicates as a whole an automotive steering assembly comprising a known pump unit 2 for pumping pressurized oil from a tank 3 at atmospheric pressure to a known hydraulic steering system 4, and which in turn comprises a pump 5, and a motor 6 for powering pump 5.

Steering assembly 1 also comprises a dual-function valve 7 mounted between tank 3 and hydraulic steering system 4, and in parallel with unit 2.

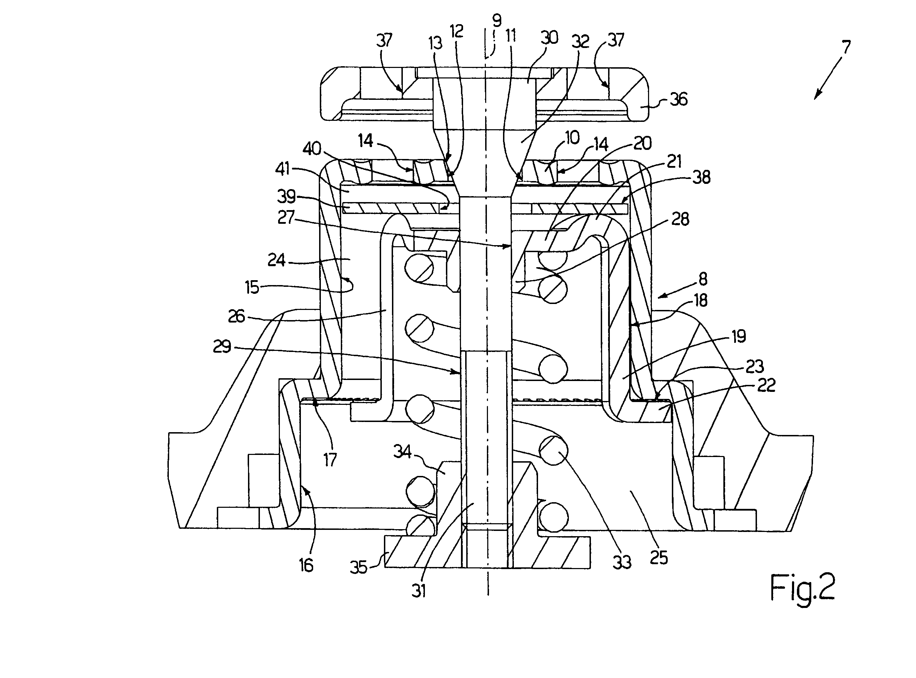

As shown in Figure 2, valve 7 comprises a substantially cup-shaped valve body 8 having a substantially vertical longitudinal axis 9 and positioned with its concavity facing downwards.

Valve body 8 is bounded axially by an end wall 10 substantially perpendicular to axis 9 and having a central hole 11, which is coaxial with axis 9 and comprises a substantially cylindrical bottom portion 12, and a top portion 13 converging with portion 12 and bounded internally by an annular surface with its convexity facing axis 9. Wall 10 also comprises a number of lateral holes 14 formed, parallel to axis 9, through wall 10 and equally spaced about axis 9.

Valve body 8 comprises a narrow top portion 15 and a wide bottom portion 16 connected to each other at a knurled surface 17 perpendicular to axis 9, and houses a substantially cup-shaped guide member 18 coaxial with axis 9 and positioned with its concavity facing downwards.

Member 18 is bounded laterally by a cylindrical wall 19 of a diameter approximately equal to but no larger than a diameter of portion 15, and is bounded axially by an end wall 20 substantially perpendicular to axis 9 and connected to wall 19 at an annular flange 21, which projects from wall 20 coaxially with axis 9.

At its free end, member 18 has a flat annular flange 22 which projects radially outwards from wall 19, contacts surface 17, when member 18 is inserted axially inside portion 15, and is bounded axially by a knurled surface 23 perpendicular to axis 9, facing surface 17, and cooperating with surface 17 to lock member 18 angularly about axis 9.

Member 18 and valve body 8 define a top chamber 24 and a bottom chamber 25, which communicate hydraulically with each other via a number of slits 26 formed through wall 19 and flange 21, and parallel to and equally spaced about axis 9.

Wall 20 has a central through hole 27 coaxial with axis 9; and a cylindrical collar 28 projecting downwards from wall 20 and aligned with hole 27. Hole 27 and collar 28 are engaged in sliding manner by a shutter member 29 mounted coaxially with axis 9 and comprising a wide, substantially cylindrical top portion 30 projecting outside valve body 8; a narrow, substantially cylindrical bottom portion 31 inside valve body 8; and a substantially truncated-cone-shaped intermediate portion 32 for engaging hole 11.

Member 29 is normally maintained in a lowered position closing hole 11 (Figure 2) by a spring 33 fitted to portion 31 and interposed between end wall 20 of member 18 and a set nut 34, which is screwed to portion 31 to selectively preload spring 33, and has a head 35 perpendicular to axis 9 and for shielding spring 33 from the pressurized oil flow from unit 2.

Member 29 also comprises a plate 36 fixed to portion 30, perpendicularly to axis 9, to radially divert at least part of the oil flow issuing from hole 11, and having a number of through holes 37 parallel to and equally spaced about axis 9.

Valve 7 also comprises a shutter member 38, in turn comprising an annular plate 39, which is mounted between walls 10 and 20, coaxially with axis 9, is positioned facing holes 14, and extends about member 29 to define, with member 29, a central feed channel 40, which is offset radially with respect to holes 14, and connects chamber 24 to a variable-volume chamber 41 defined between plate 39 and wall 10. Member 38 is fitted in sliding manner to both member 29 and valve body 8, and is normally maintained in a raised position (not shown) closing holes 14 by the pressured oil supplied to valve 7 by unit 2.

Operation of steering assembly 1 will now be described with reference to Figures 1 and 2, and as of when motor 6 powering pump 5 has been turned on, and pump 5 pumps pressurized oil to hydraulic steering system 4, to chamber 25, and, through slits 26, to chamber 24 to keep shutter member 38 in the raised closed position (not shown).

Spring 33 is preloaded by set nut 34 to keep shutter member 29 in the lowered position (Figure 2) closing hole 11 with a force greater than that exerted in the opposite direction on member 29 by the oil pressure in chamber 25 when steering assembly 1 is operating normally, but lower than the force exerted on member 29 when the oil pressure in chamber 25 is substantially equal to a given threshold value.

Consequently, when the oil pressure in chamber 25 substantially equals said threshold value, shutter member 29 moves into a raised position (not shown) opening hole 11, thus draining the oil from pump 5 into tank 3 and so restoring oil pressure to below the threshold value.

In the event unit 2 breaks down, so that no pressurized oil is supplied by pump 5 to hydraulic steering system 4 and chambers 24 and 25, shutter member 29 remains in the lowered position (Figure 2) closing hole 11, while shutter member 38 moves, by force of gravity or a vacuum in chambers 24, 25, into a lowered position (Figure 2) opening holes 14, and into contact with flange 21, to enable the oil in tank 3 to be supplied firstly into chamber 41 through holes 14, and then into chamber 25 through feed channel 40 and slits 26, and finally to hydraulic steering system 4 to ensure operation of steering assembly 1 even in the event of a breakdown of unit 2.

## Claims

1. A hydraulic circuit for supplying fluid to a user device (4), the hydraulic circuit comprising a tank (3) for the fluid; a pump unit (2) for pumping the fluid from the tank (3) to the user device (4); and a dual-function valve (7) fitted between the tank (3) and the user device (4), in parallel with the pump unit (2), and comprising a valve body (8) having a given longitudinal axis (9); and being **characterized in that** the valve (7) also comprises a first and a second shutter member (38, 29) mounted to slide inside the valve body (8), and normally positioned respectively in a first and a second closed position closing the valve (7); the first shutter member (38) being movable from the first closed position into a first open position opening the valve (7), in the event of breakdown of the pump unit (2), to ensure supply of the fluid from the tank (3) to the user device (4); and the second shutter member (29) being movable from the second closed position into a second open position when the pressure value of the fluid supplied by the pump unit (2) to the user device (4) substantially equals a threshold value, so as to drain the fluid from the pump unit (2) into the tank (3).

2. A hydraulic circuit as claimed in Claim 1, wherein the first shutter member (38) is moved from the first open position to the first closed position by said fluid, and from the first closed position to the first open position by force of gravity or by a vacuum in the hydraulic circuit.

3. A hydraulic circuit as claimed in Claim 1 or 2, wherein the valve (7) also comprises elastic thrust means (33) for normally keeping the second shutter member (29) in the second closed position; the second shutter member (29) being moved from the second closed position to the second open position by said fluid and in opposition to said elastic thrust means (33).

4. A hydraulic circuit as claimed in any one of the foregoing Claims, wherein the second shutter member (29) is coaxial with said axis (9); the first shutter member (38) extending about the second shutter member (29), coaxially with said axis (9).

5. A hydraulic circuit as claimed in any one of the foregoing Claims, wherein the valve body (8) is substantially cup-shaped, is bounded axially by an end wall (10) substantially perpendicular to said axis (9), and comprises a stop member (21) mounted perpendicularly to said axis (9); the first shutter member (38) being mounted to move between the end wall (10) and the stop member (21).

6. A hydraulic circuit as claimed in Claim 5, wherein the end wall (10) and the first shutter member (38) respectively comprise first and second passage means (14, 40) enabling supply of the fluid through the valve (7) when the first shutter member (38) is in the first open position.

7. A hydraulic circuit as claimed in Claim 5 or 6, wherein the valve body (8) also comprises a seat (11), which is formed through the end wall (10), is coaxial with said axis (9), is engaged in sliding manner by the second shutter member (29), and converges towards said axis (9).

8. A hydraulic circuit as claimed in Claim 7, wherein at least part of the seat (11) is bounded internally by an annular surface having a convexity facing said axis (9).

9. A hydraulic circuit as claimed in Claim 7 or 8, wherein the second shutter member (29) comprises a substantially truncated-cone-shaped portion (32), which engages the seat (11) in fluidtight manner when the second shutter member (29) is in the second closed position.

10. A hydraulic circuit as claimed in any one of Claims 7 to 9, wherein the second shutter member (29) comprises a flow diverter (36) facing said seat (11) to at least partly divert the fluid issuing from the seat (11) when the second shutter member (29) is in the second open position.

11. A hydraulic circuit as claimed in Claim 10, wherein the flow diverter (36) comprises a plate (36) perpendicular to said axis (9) and having a number of holes (37) formed through the plate (36) and parallel to said axis (9).

12. An automotive steering assembly comprising a hydraulic steering system (4), and a hydraulic circuit for supplying oil to the hydraulic steering system (4) and as claimed in Claims 1 to 11.
